# EUROPEAN PATENT APPLICATION

(11) **EP 1 918 882 A1**
(43) Date of publication of application: **07.05.2008**
(21) Application number: 07405300.0
(22) Date of filing: 04.10.2007
(51) Int. Cl.: G06T 17/00

(54) **Method for converting two-dimensional drawing into three-dimensional solid model and method for converting attribute**

(30) Priority: 30.10.2006 JP 2006293797
(71) Applicant: YAMAZAKI MAZAK CORPORATION, Niwa-gun Aichi, pref. (JP)
(72) Inventor: Yamazaki, Tsunehiko, c/o Yamazaki Mazak Corp., Niwa-gun, Aichi pref. (JP); Miyakawa, Naoomi, c/o Yamazaki Mazak Corp., Niwa-gun, Aichi pref. (JP)
(74) Representative: Moinas, Michel

(57) **Abstract**

The invention provides a method for creating a three-dimensional solid model from a two-dimensional projection drawing created on a CAD screen via a simple operation. Reference points P1, P100 and P200 are respectively selected on a front view, a plan view and a right side view of a CAD screen. Line L1 is selected in step (1), and points P100 and P101 are selected in steps (2) and (3). By selecting lines L200 and L201 in steps (4) and (5), the coordinates of three-dimensional elements L300 and L301 are recognized. Thereafter, the procedure is repeated sequentially to recognize the whole shape of the product via points and lines. By recognizing closed shapes surrounded by lines as surfaces, it becomes possible to create a three-dimensional solid model via a simple method.

## Description

### BACKGROUND OF THE INVENTION

### Field of the invention

The present invention relates to a method for converting a two-dimensional drawing created by a machine drawing method into a three-dimensional solid model, and a method for converting attributes.

### Description of the related art

Drawings created via a machine drawing method used for forming machine components and the like are two-dimensional drawings such as a front view, a plan view and a side view representing the shape of the component, to which are added information such as dimension, tolerance, surface treatment, material and coating.

The transition of design approach from a two-dimensional CAD to a three-dimensional CAD enables to improve design efficiency and quality, and the use of a three-dimensional solid model contributes significantly to cutting down development costs of machinery and equipment and the like.

However, the including of so-called attribute information such as dimension, tolerance, surface treatment, material and coating described in the two-dimensional drawing into the three-dimensional solid model has not yet been standardized, and moreover, the conventional method for creating a three-dimensional solid model was very complex and required a large number of steps. The current state of utilization of the two-dimensional drawings and three-dimensional solidmodels and the drawbacks thereof are disclosed in "Nikkei Monozukuri" magazine, October 2006, pages 104-212, published by Nihon Keizai Shimbun Inc., (hereinafter referred to as non-patent document 1), and methods for automatically developing a three-dimensional solid model in metal sheet processing are disclosed in Japanese Patent Application Laid-Open Publication Nos. 2001-216010 (patent document 1) and 2001-147710 (patent document 2).

Complex operations are required to create a three-dimensional solid model, and it is difficult to state attributes such as dimension and tolerance.

### SUMMARY OF THE INVENTION

The object of the present invention is to provide a method for converting two-dimensional CAD drawings into a three-dimensional solid model by a simple operation and to provide a method for automating the definition of attributes.

In order to realize the above-mentioned objects, the present invention provides a method for converting a product illustrated as a two-dimensional projection drawing using CAD based on a standardized machine drawing method into a three-dimensional solid model, the method comprising: a step of defining a drawing range of each projection drawing; a step of defining a reference point of each projection drawing; a step of selecting a line and a point as reference of a graphic shape illustrated in each projection drawing and recognizing the same as three-dimensional coordinates; a step of selecting all the lines and points of elements constituting a component graphic, recognizing the three-dimensional coordinates and constituents thereof, and creating a wire frame solid model; a step of selecting line elements of the constituent so that they constitute a closed shape in order to recognize a surface; a step of recognizing all the lines or surfaces to complete a solid closed shape; and a step of recognizing surfaces facing an exterior.

Further, the present invention can comprise a step of creating a three-dimensional solid model directly from the wire frame solid model.

Moreover, the selection of points and lines of the graphic can be performed automatically.

Furthermore, the present invention further comprises a step of converting a surface displayed in arrow view on the projection drawing into an arrow view drawing, and also a step of converting a cross-sectional view of the two-dimensional projection drawing into a three-dimensional solid model.

Moreover, the present invention comprises a step of defining an infinite plane that cannot be expressed by numerals shown in the two-dimensional projection drawing, and a step of defining a shape that has a filled content or solid and a shape that has an empty content or hollow.

Next, the present invention comprises a step of creating an attribute of a product described in the two-dimensional drawing in the three-dimensional solid model, wherein the attribute is a shape attribute represented by a hole, a cross-section, a sphere and a rotation, and the attribute is information such as dimension, tolerance, material, heat treatment, surface treatment, hole processing and tap.

According to the present invention, by tracing the shape elements of a product drawn as projection drawings on a two-dimensional CAD and by designating planes thereof, itbecomes possible to create a three-dimensional solid model easily. Moreover, attributes and the like required for processing the product can be converted easily.

### BRIEF DESCRIPTION OF THE DRAWINGS

FIG. 1 is an example of a two-dimensional drawing for describing the procedure or steps for converting a two-dimensional drawing into a three-dimensional solid model according to the present invention;
FIG. 2 is an explanatory view showing the step for recognizing the three-dimensional coordinates of each drawing element so as to define the shape of a work W1 illustrated in the two-dimensional drawing;
FIG. 3-1 is an explanatory view showing the step or procedure for recognizing each drawing element illustrated in the two-dimensional drawing on a three-dimensional coordinate according to the present invention;
FIG. 3-2 is an explanatory view showing the step or procedure for recognizing each drawing element illustrated in the two-dimensional drawing on a three-dimensional coordinate according to the present invention;
FIG. 3-3 is an explanatory view showing the step or procedure for recognizing each drawing element illustrated in the two-dimensional drawing on a three-dimensional coordinate according to the present invention;

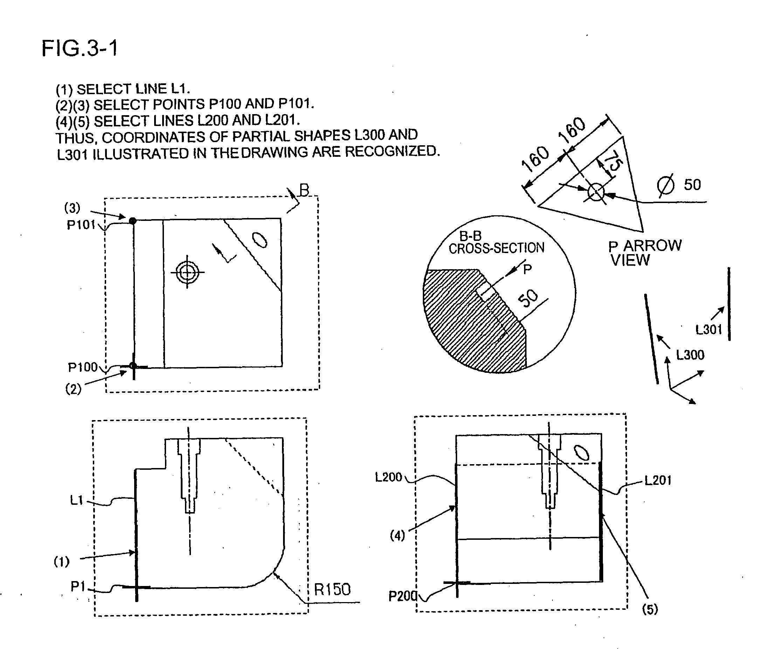

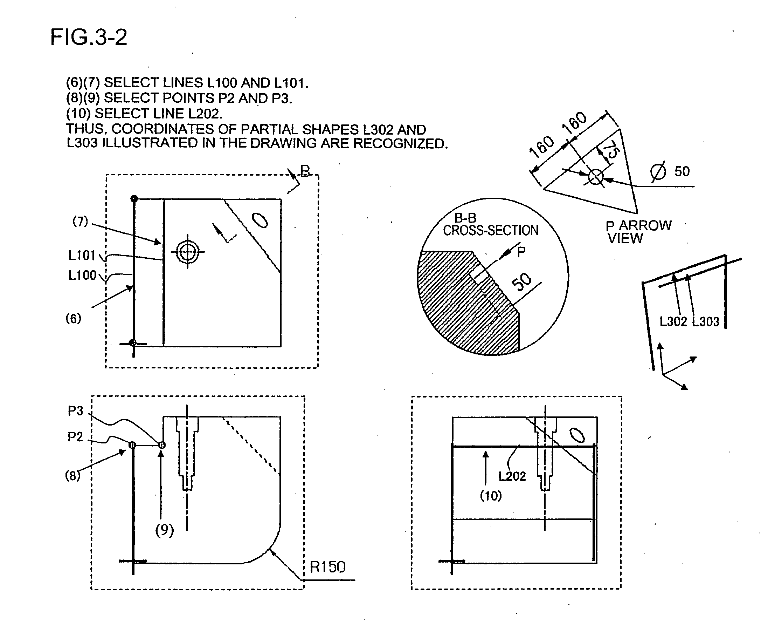

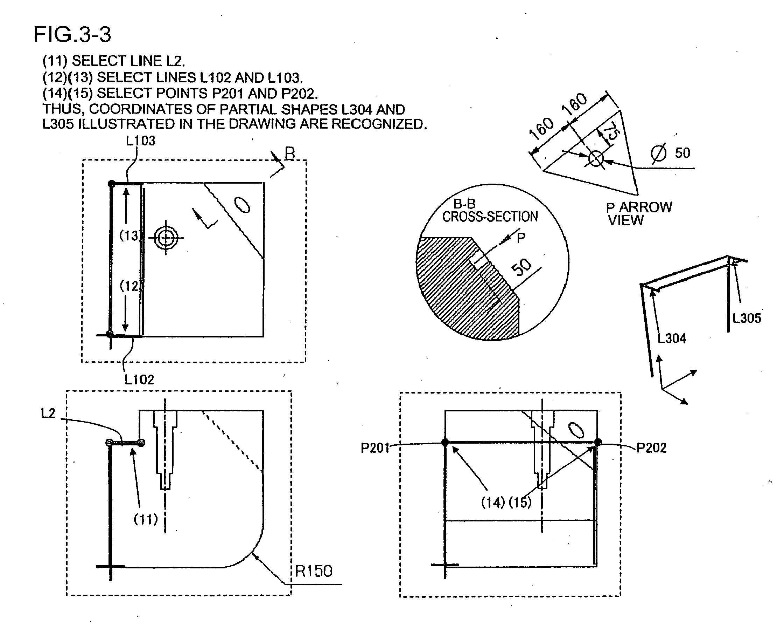

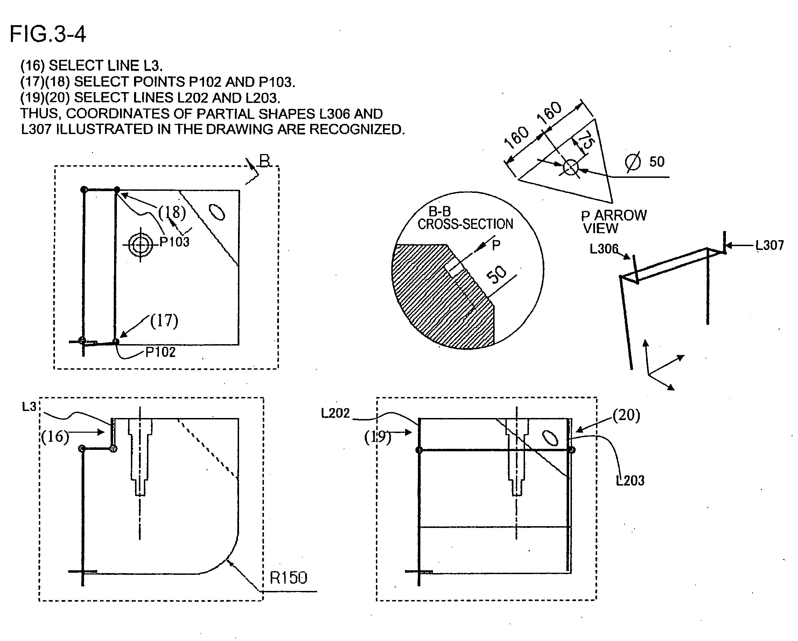

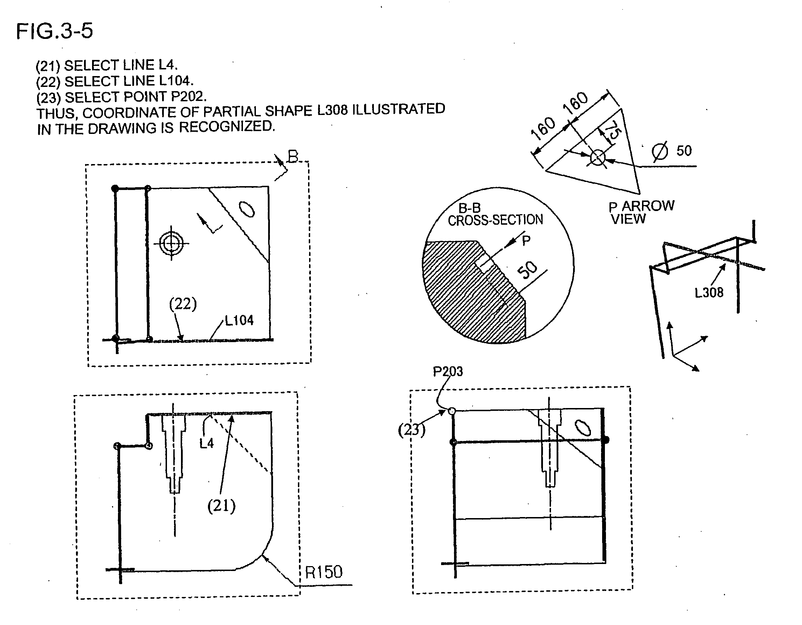

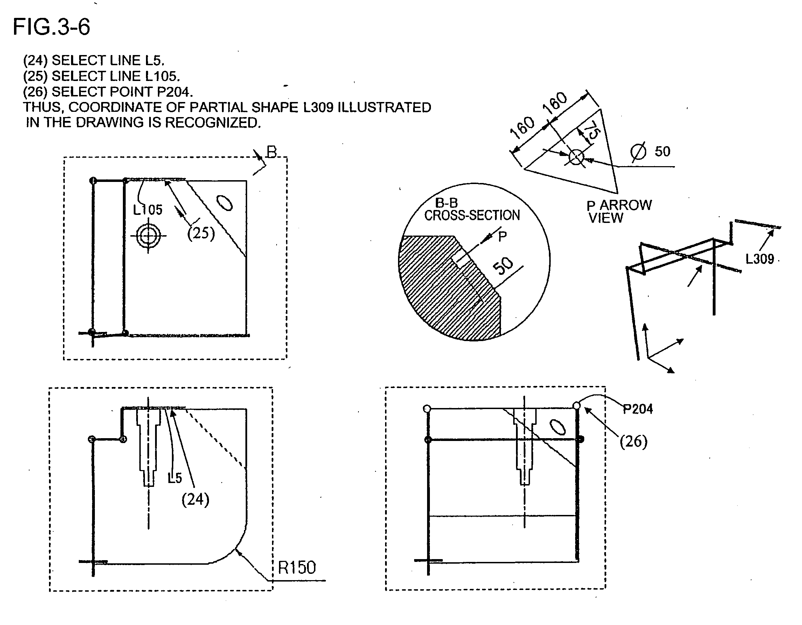

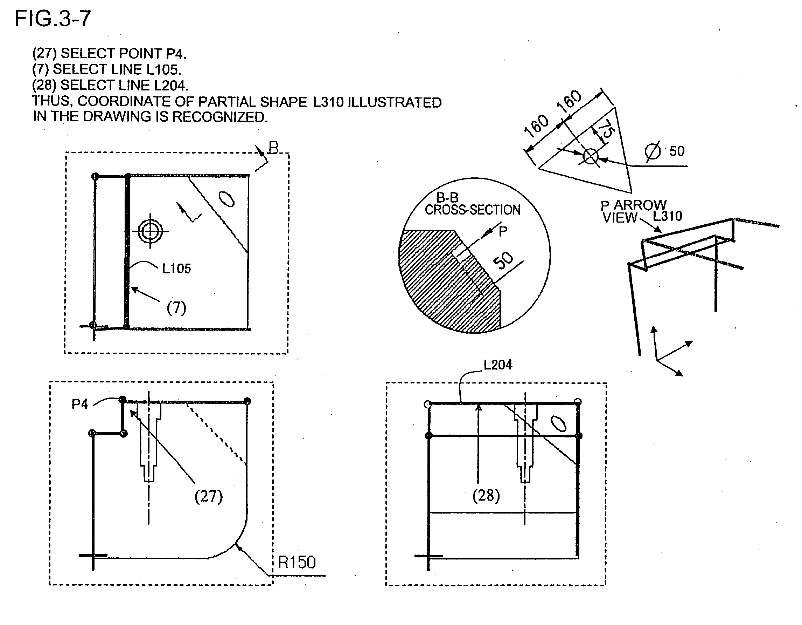

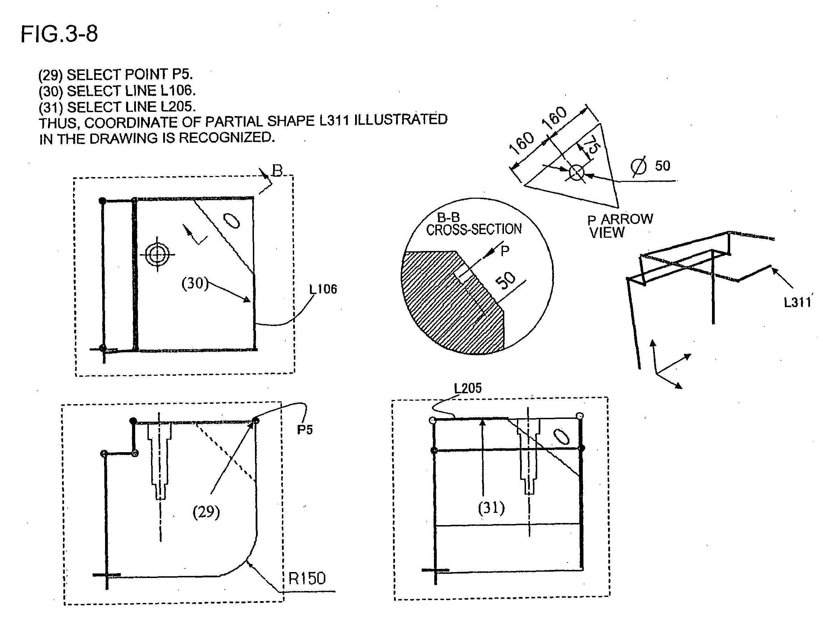

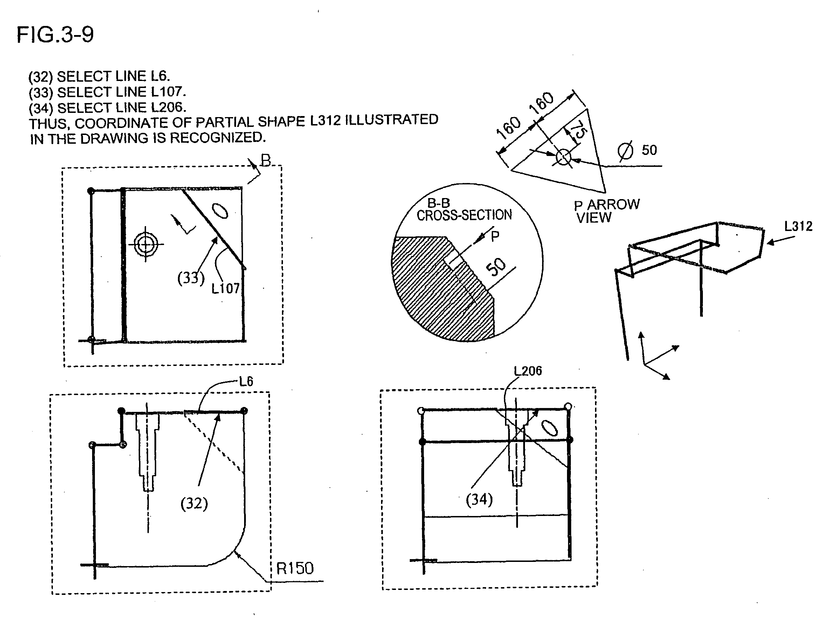

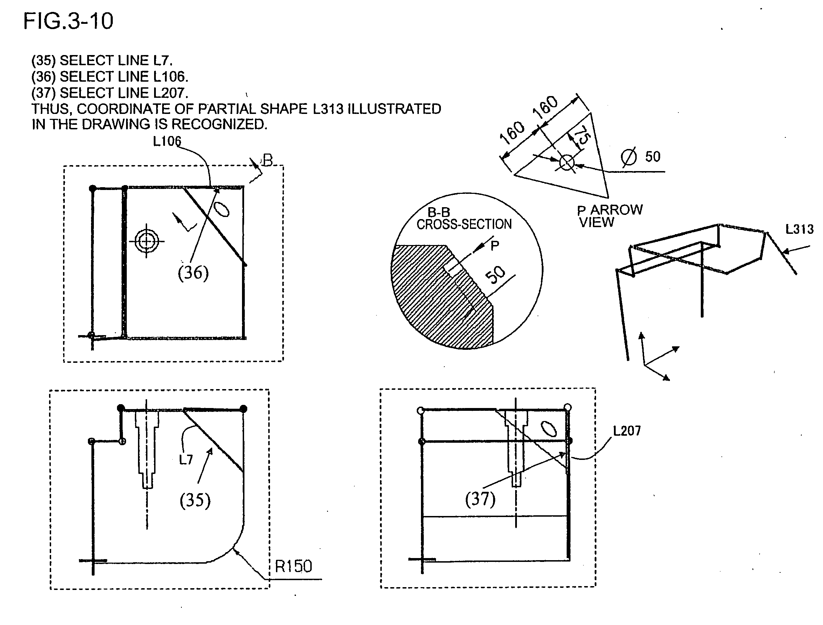

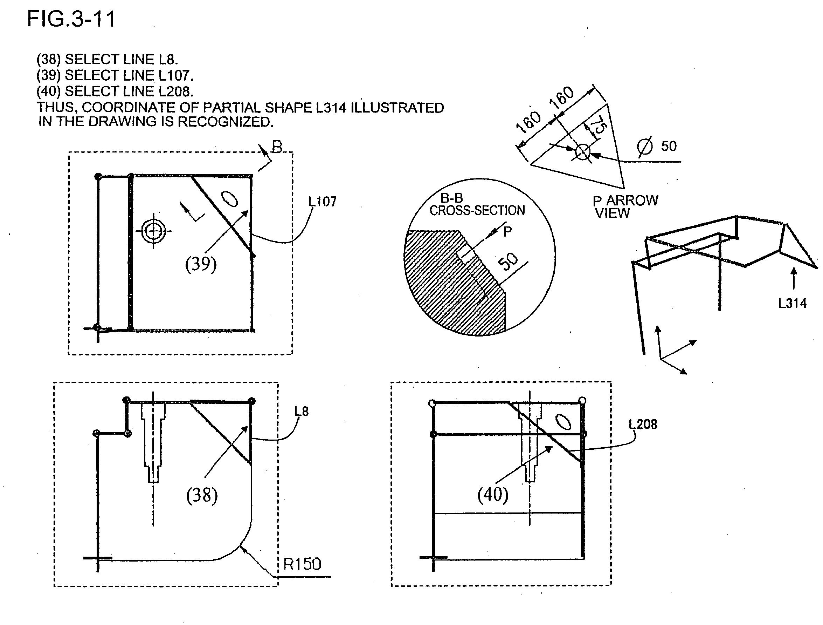

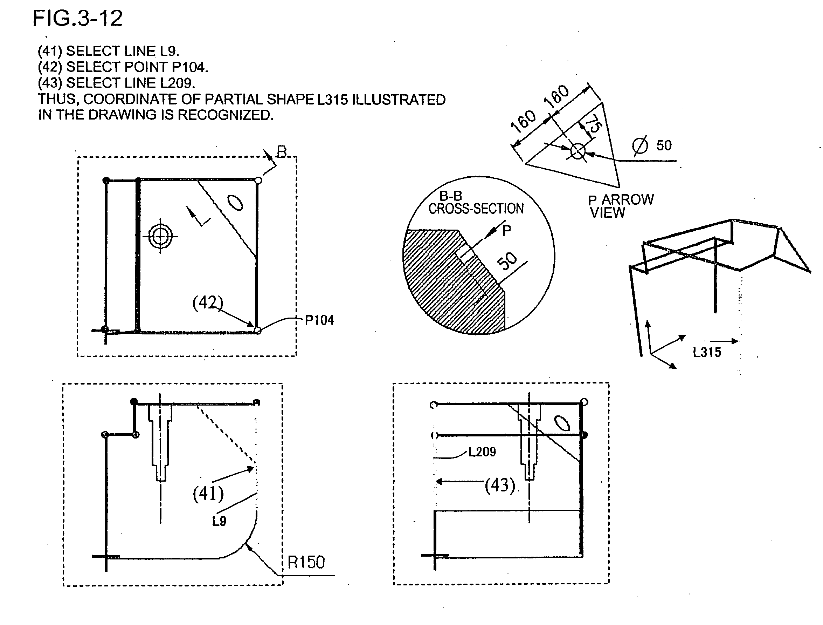

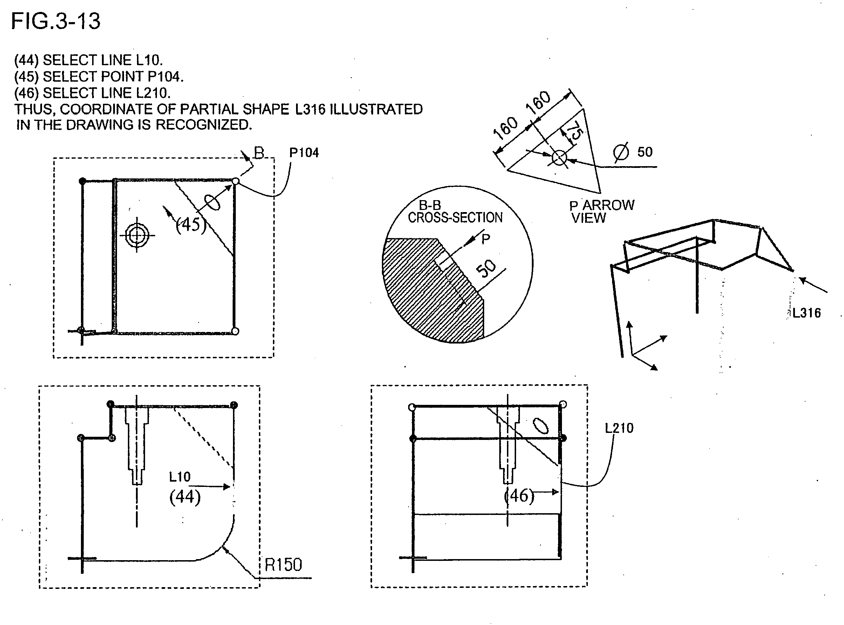

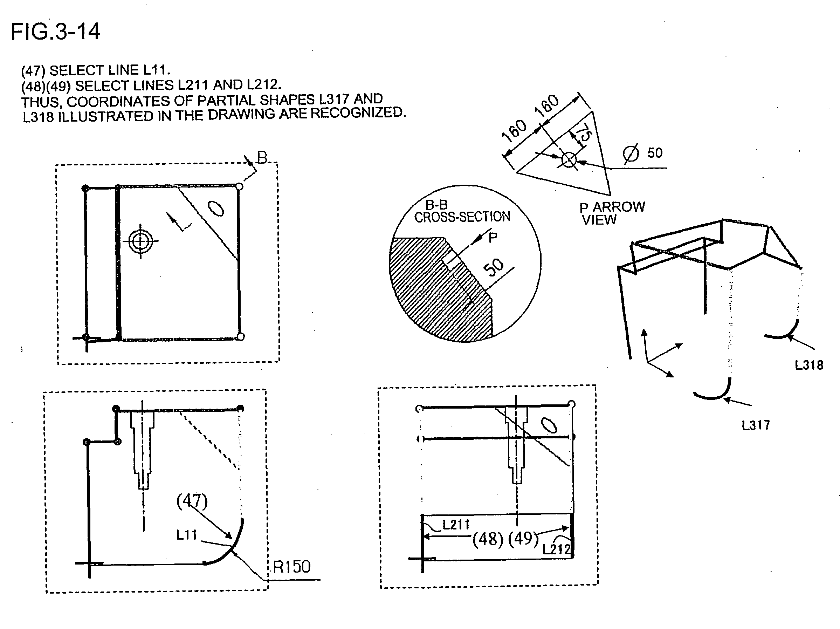

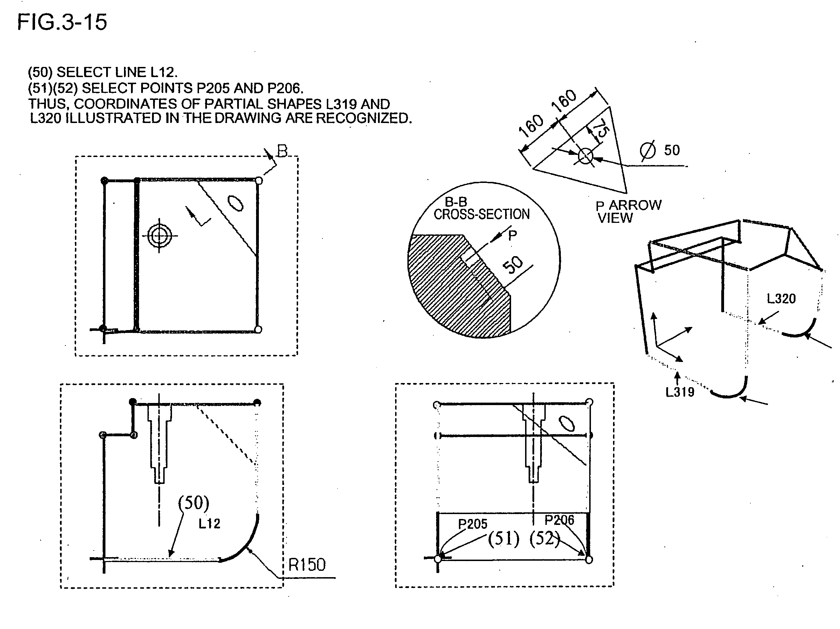

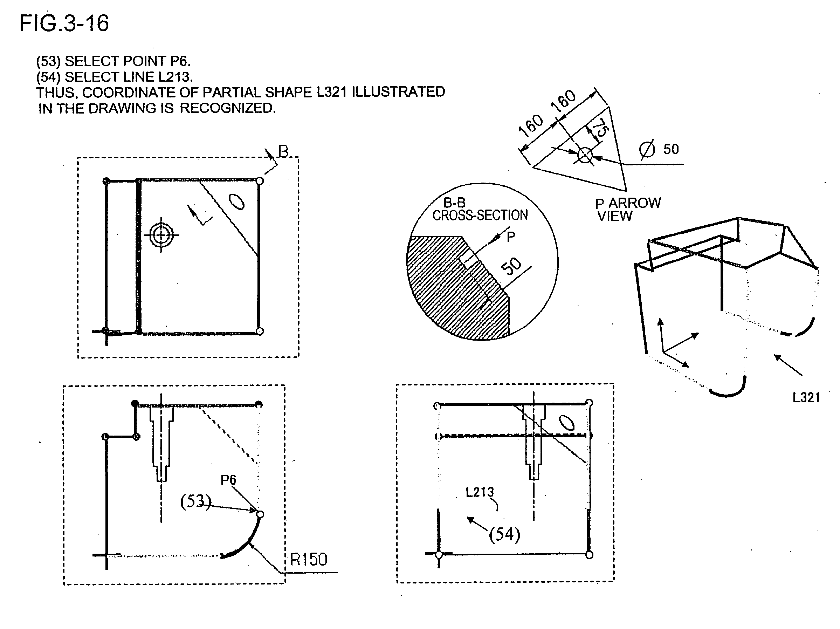

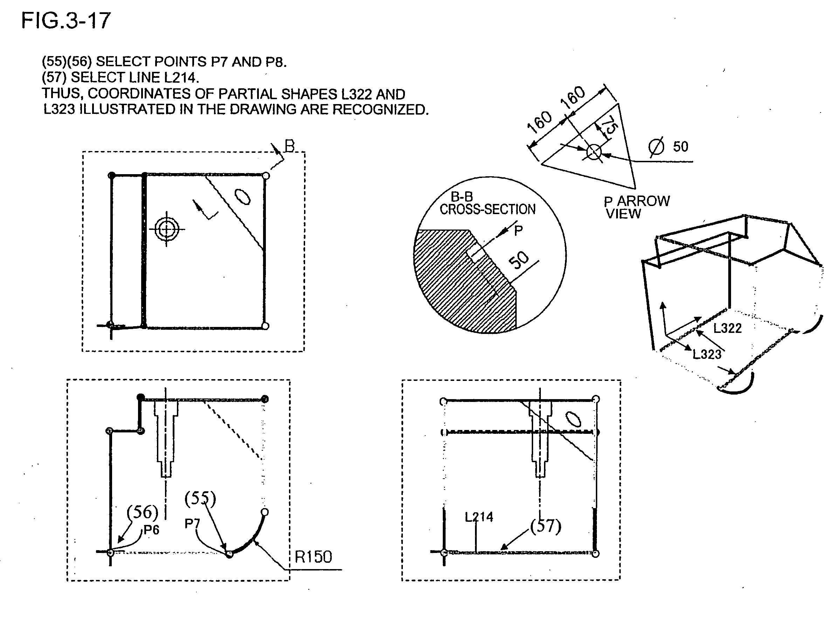

FIG. 3-4 is an explanatory view showing the step or procedure for recognizing each drawing element illustrated in the two-dimensional drawing on a three-dimensional coordinate according to the present invention;
FIG. 3-5 is an explanatory view showing the step or procedure for recognizing each drawing element illustrated in the two-dimensional drawing on a three-dimensional coordinate according to the present invention;
FIG. 3-6 is an explanatory view showing the step or procedure for recognizing each drawing element shown in the two-dimensional drawing on a three-dimensional coordinate according to the present invention;
FIG. 3-7 is an explanatory view showing the step or procedure for recognizing each drawing element illustrated in the two-dimensional drawing on a three-dimensional coordinate according to the present invention;
FIG. 3-8 is an explanatory view showing the step or procedure for recognizing each drawing element illustrated in the two-dimensional drawing on a three-dimensional coordinate according to the present invention;
FIG. 3-9 is an explanatory view showing the step or procedure for recognizing each drawing element illustrated in the two-dimensional drawing on a three-dimensional coordinate according to the present invention;
FIG. 3-10 is an explanatory view showing the step or procedure for recognizing each drawing element illustrated in the two-dimensional drawing on a three-dimensional coordinate according to the present invention;
FIG. 3-11 is an explanatory view showing the step or procedure for recognizing each drawing element illustrated in the two-dimensional drawing on a three-dimensional coordinate according to the present invention;
FIG. 3-12 is an explanatory view showing the step or procedure for recognizing each drawing element illustrated in the two-dimensional drawing on a three-dimensional coordinate according to the present invention;
FIG. 3-13 is an explanatory view showing the step or procedure for recognizing each drawing element illustrated in the two-dimensional drawing on a three-dimensional coordinate according to the present invention;
FIG. 3-14 is an explanatory view showing the step or procedure for recognizing each drawing element illustrated in the two-dimensional drawing on a three-dimensional coordinate according to the present invention;
FIG. 3-15 is an explanatory view showing the step or procedure for recognizing each drawing element illustrated in the two-dimensional drawing on a three-dimensional coordinate according to the present invention;
FIG. 3-16 is an explanatory view showing the step or procedure for recognizing each drawing element illustrated in the two-dimensional drawing on a three-dimensional coordinate according to the present invention;
FIG. 3-17 is an explanatory view showing the step or procedure for recognizing each drawing element illustrated in the two-dimensional drawing on a three-dimensional coordinate according to the present invention;

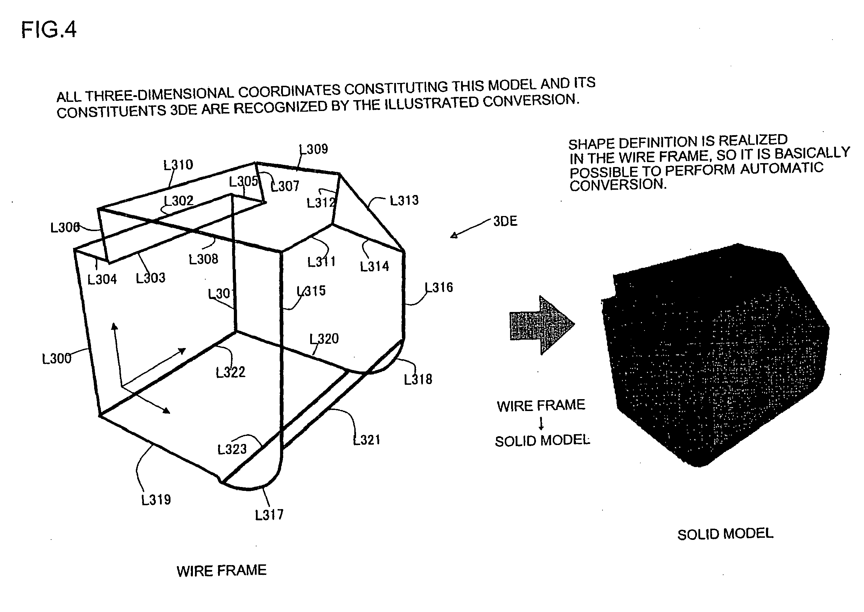

FIG. 4 is an explanatory view showing all the three-dimensional coordinates and its constituents constituting a model corresponding to the work acquired by the steps illustrated in FIGS. 3-1 to 3-17;

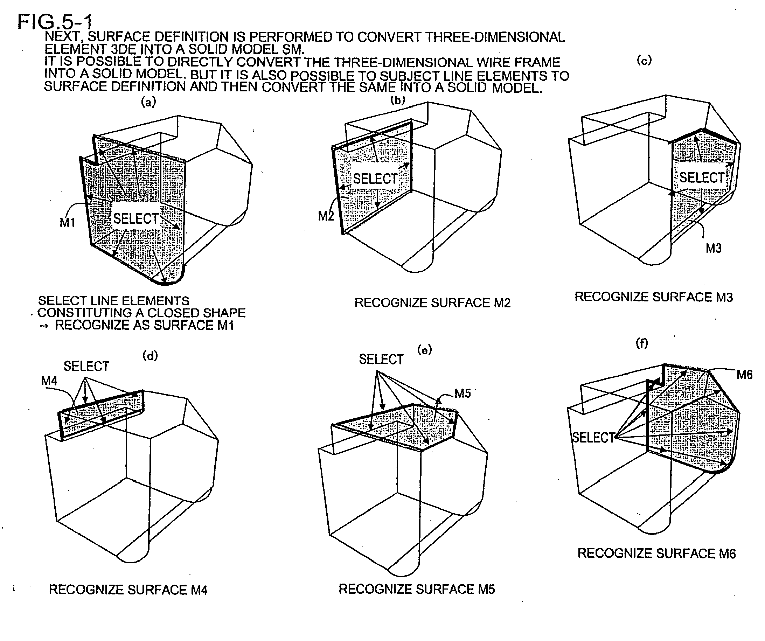

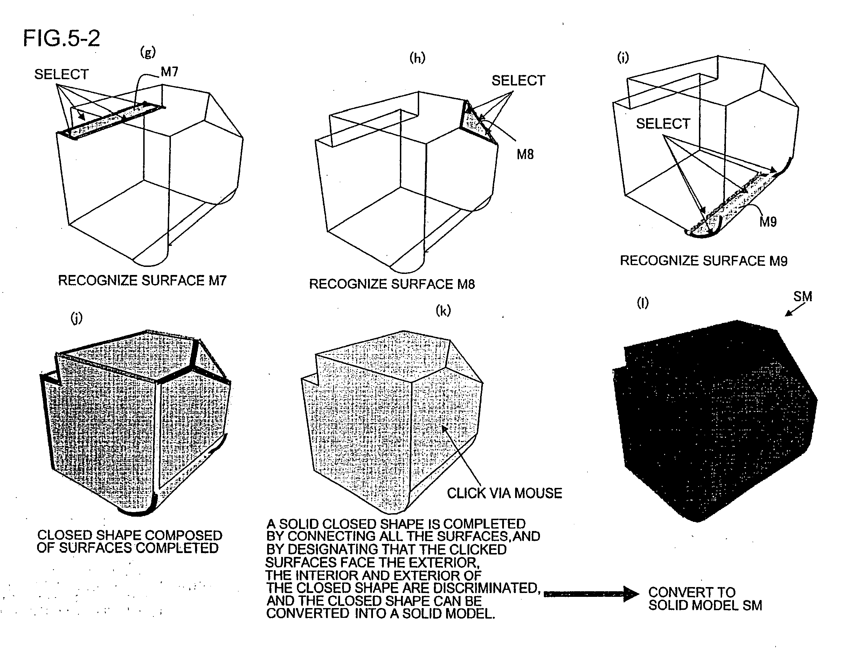

FIG. 5-1 is an explanatory view showing a surface definition step for converting the three-dimensional elements into a solid model;
FIG. 5-2 is an explanatory view showing a surface definition step for converting the three-dimensional elements into a solid model;

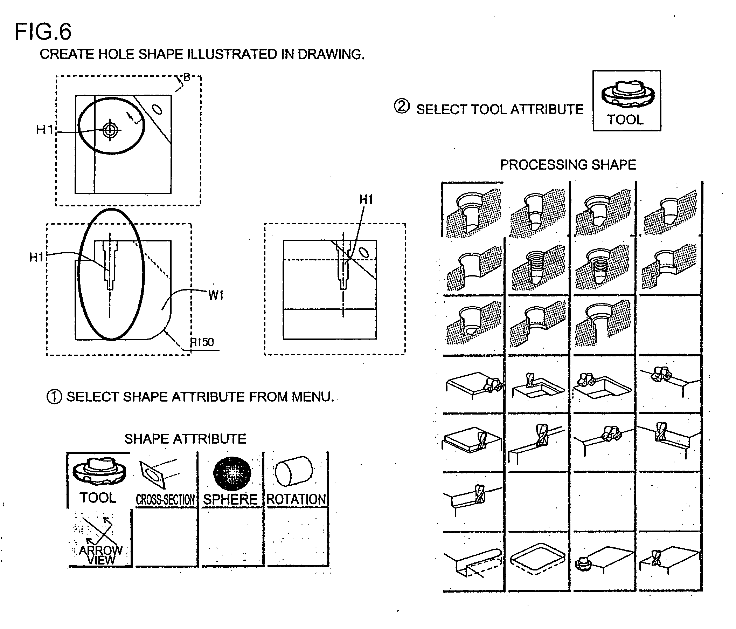

FIG. 6 is an explanatory view showing the operation procedure for processing a hole on the work illustrated in the two-dimensional drawing;

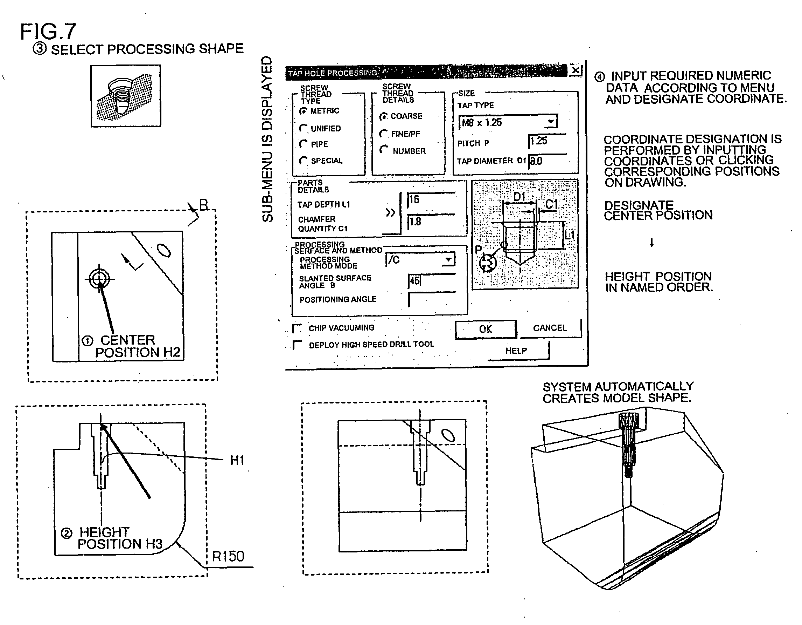

FIG. 7 is an explanatory view showing the operation procedure for processing a hole on the work illustrated in the two-dimensional drawing;

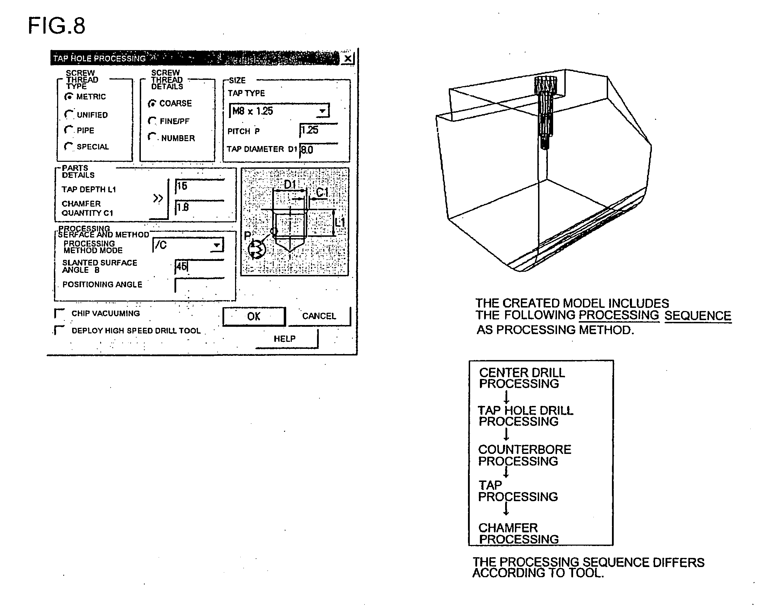

FIG. 8 is an explanatory view showing the operation procedure for processing a hole on the work illustrated in the two-dimensional drawing;

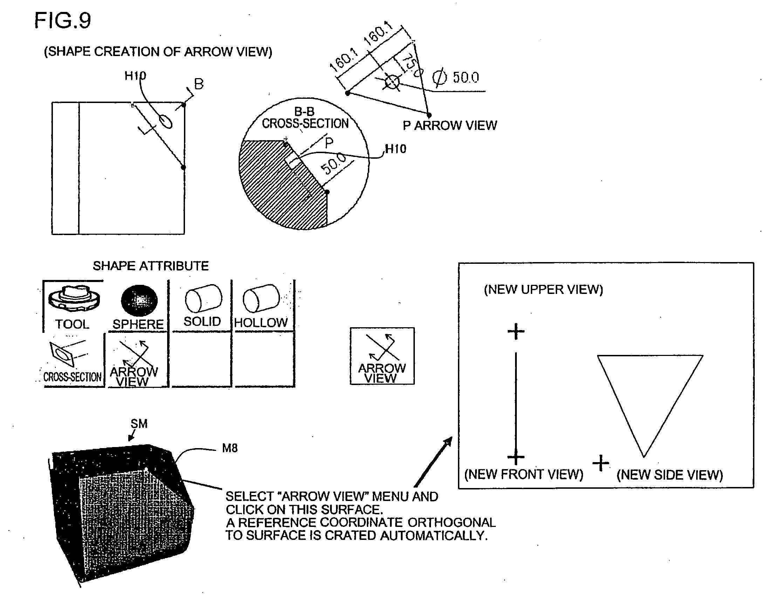

FIG. 9 is an explanatory view showing the procedure for converting an arrow view;

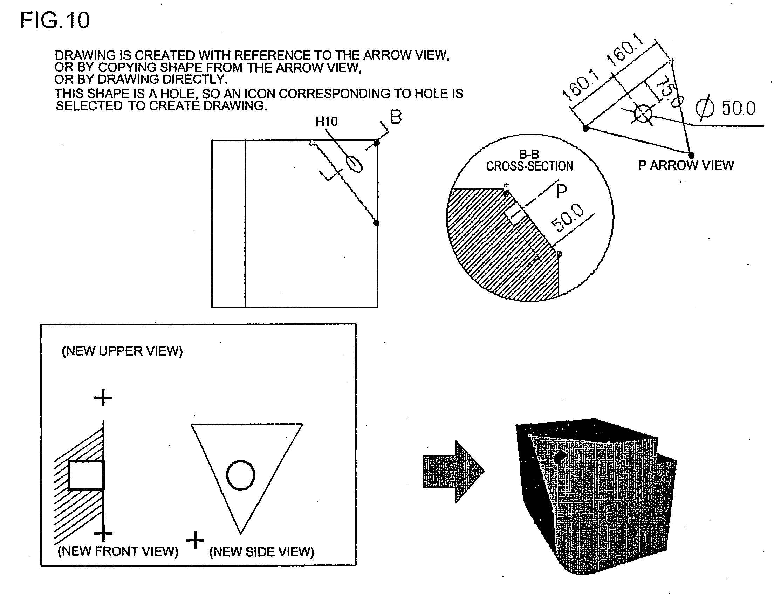

FIG. 10 is an explanatory view showing the procedure for converting an arrow view;

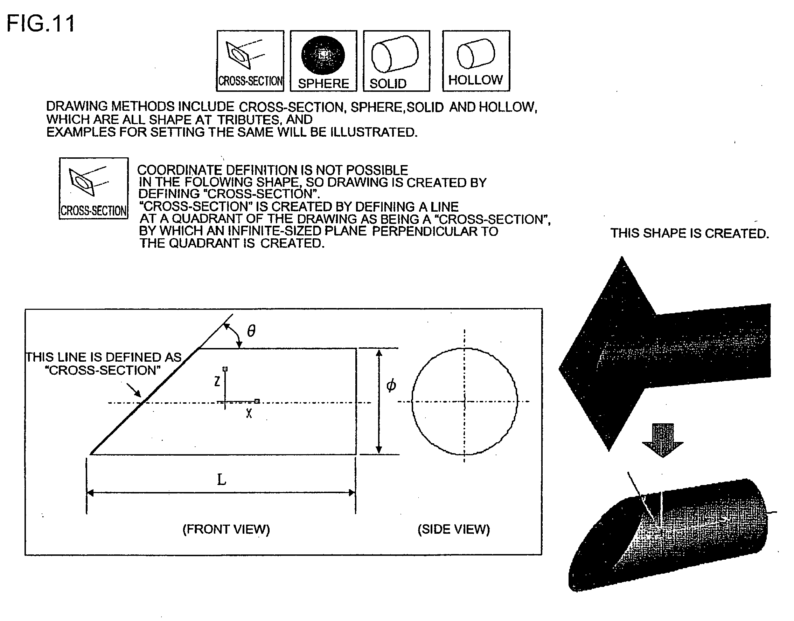

FIG. 11 is an explanatory view showing the procedure for creating a shape attribute of a cross-section;

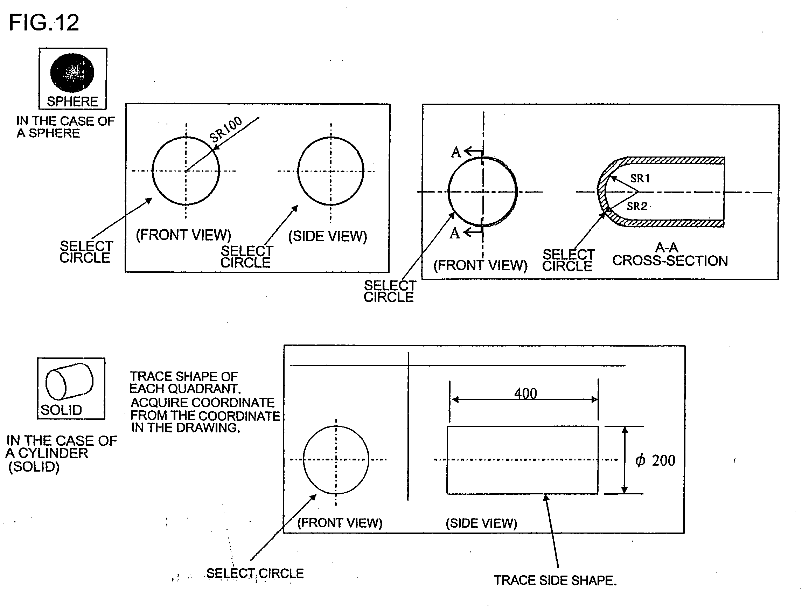

FIG. 12 is an explanatory view showing the procedure for creating shape attributes of a sphere and a cylinder;

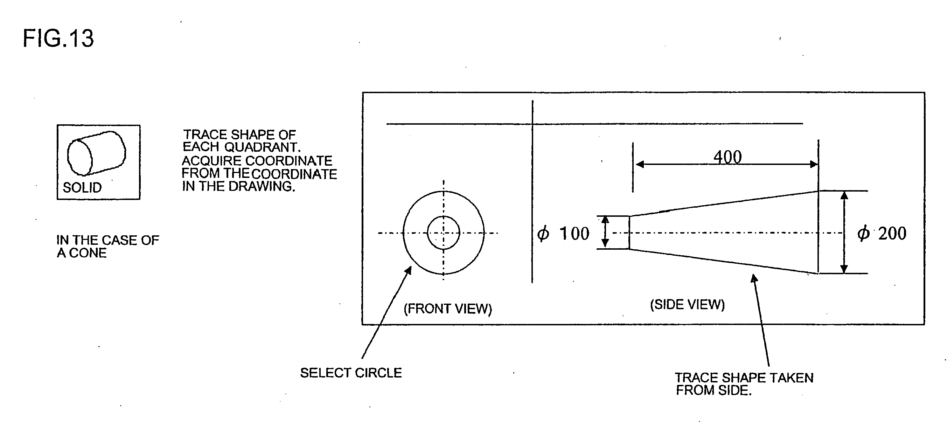

FIG. 13 is an explanatory view showing the procedure for creating a shape attribute of a cone;

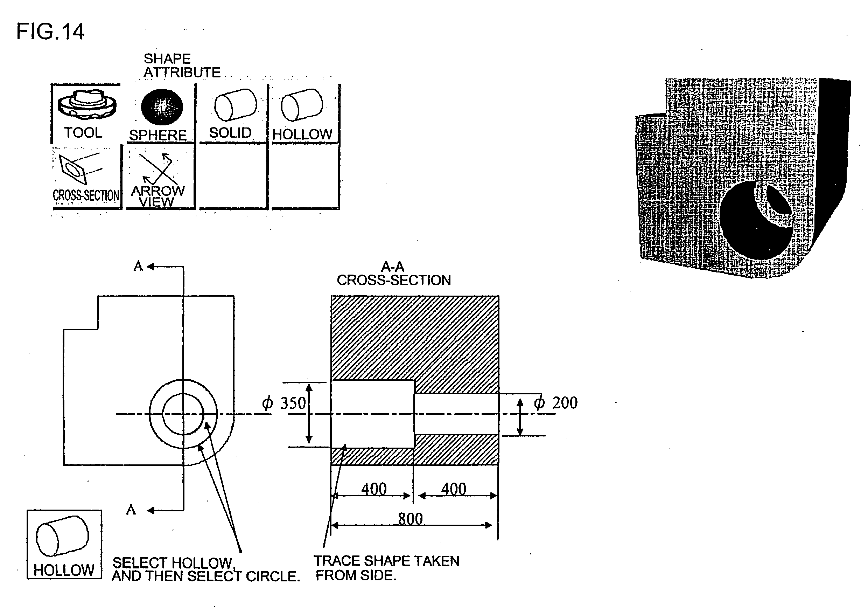

FIG. 14 is an explanatory view showing the procedure for creating a cylindrical hole illustrated in a cross-section; and

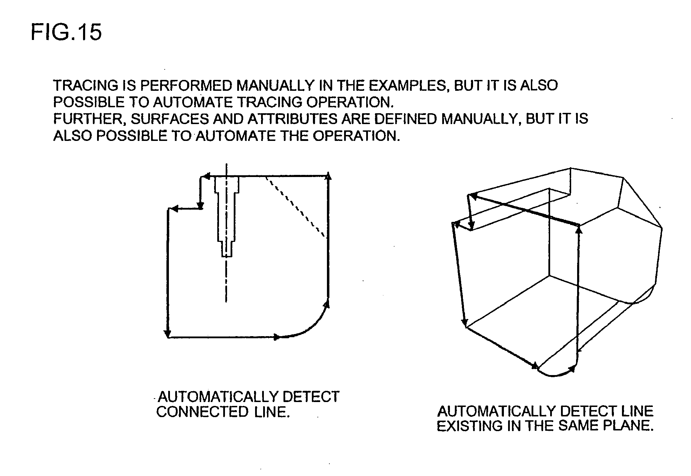

FIG. 15 is an explanatory view showing an example of automating the tracing operation.

### DETAILED DESCRIPTION OF THE PREFERRED EMBODIMENTS

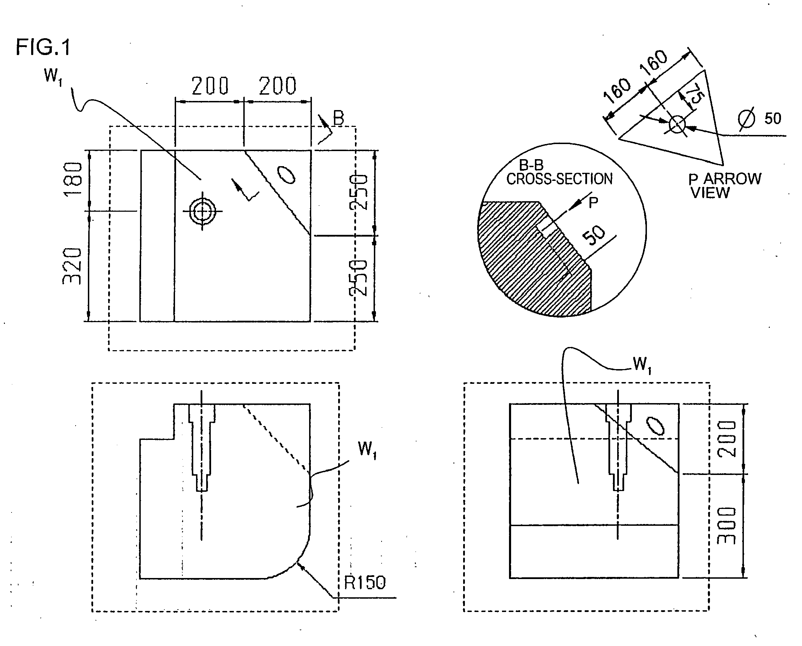

FIG. 1 is an example of two-dimensional drawings that illustrate the procedure or steps for converting the two-dimensional drawings into a three-dimensional solid model according to the present invention.

The external shape of a work W1 which is a mechanical product is illustrated by a front view, a plan view and a right side view which are trigonometry projection drawings created based on a standardized machine drawing method on a CAD screen, additionally provided with a B-B cross-section of the plan view and a P arrow view shown on the B-B cross-section.

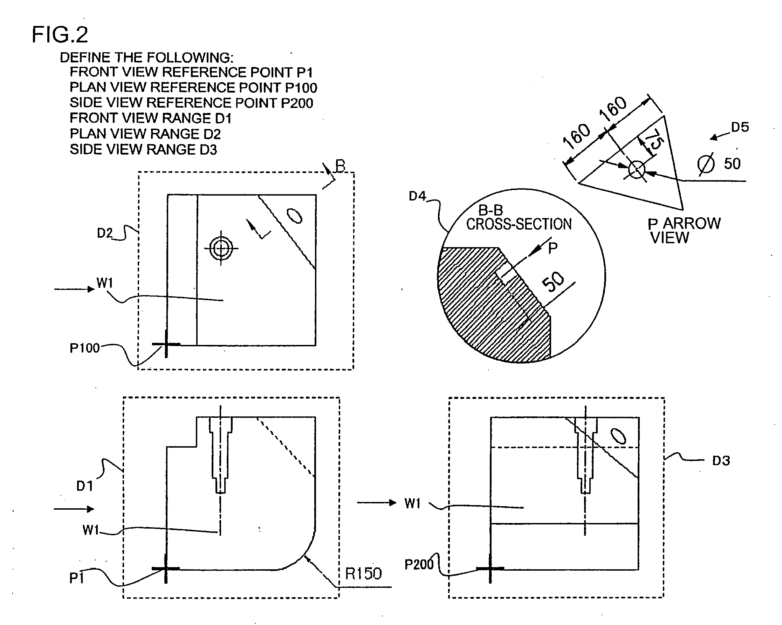

FIG. 2 illustrates a step for recognizing the three-dimensional coordinate of each drawing element so as to define the shape of the work W1 illustrated in the two-dimensional drawings on the CAD screen.

At first, a front view drawing range D1, a plan view drawing range D2 and a right side view drawing range D3 are defined. The B-B cross-sectional drawing corresponding to the plan view drawing D2 is defined as D4, and the P arrow view illustrated in the B-B cross-sectional drawing D4 is defined as drawing D5.

Then, a reference point of the work W1 in the front view drawing D1 is defined as point P1, and a reference point of the work W1 in the plan view drawing D2 is defined as point P100. Similarly, a reference point of the work W1 in the right side view drawing D3 is defined as point P200.

Now, with reference to FIGS. 3-1 through 3-17, the steps or procedure for recognizing each of the drawing elements illustrated in the two-dimensional drawing on a three-dimensional coordinate according to the present invention will be described.

The numerals in brackets in the drawings denote the order of the steps. Points are denoted by reference character P and lines are denoted by reference character L.

For sake of description, in the front views, the numerals following reference characters P and L are a sequence of numbers starting from the number 1, and in the plan views, the numbers are a sequence of numbers starting from the number 100. Similarly, in the right side views, the numbers are a sequence of numbers starting from the number 200.

Furthermore, the three-dimensional coordinates in the drawings are shown by a sequence of numbers starting from the number 300 following the character L.

In step (1), line L1 on the front view is selected. In steps (2) and (3), points P100 and P101 on the plan view are selected, and in steps (4) and (5), lines L200 and L201 on the right side view are selected. By these operations, the coordinates of partial shapes L300 and L301 illustrated in the two-dimensional drawing are recognized.

In FIG. 3-2, lines L100 and L101 on the plan view are selected in steps (6) and (7), points P2 and P3 on the front view are selected in steps (8) and (9), and line L202 on the right side view is selected in step (10).

Shapes L302 and L303 are recognized by these steps.

In FIG. 3-3, line L2 in the front view is selected in step (11), lines L102 and L103 on the plan view are selected in steps (12) and (13), and points P201 and P202 on the right side view are selected in steps (14) and (15).

Shapes L304 and L305 are recognized by these steps.

Similar steps are continuously performed until step (57) illustrated in FIG. 3-17.

FIG. 4 illustrates a wire frame 3DE composed of all the three-dimensional coordinates and its constituents constituting a model corresponding to work W1 acquired by the steps described in FIGS. 3-1 through 3-17.

Next, the procedure proceeds to a surface definition process for converting the three-dimensional wire frame DE to a solid model SM.

FIGS. 5-1 and 5-2 illustrate the surface definition process.

In FIG. 5-1(a), line elements are selected so that they define a closed shape, which is recognized as a surface M1. In FIG. 5-1(b), surfaceM2 is recognized, and in FIG. 5-1 (c), surface M3 is recognized.

Thereafter, the steps are continuously performed until surface M9 is recognized in FIG. 5-2(i), by which the surface recognition process is completed, and a closed shape of surfaces is completed as shown in FIG. 5-2(j).

In the step illustrated in FIG. 5-2(k), each side of the completed solid closed shape is clicked, and by denoting that the clicked surfaces face the exterior, the interior and exterior surfaces are discriminated.

By this process, the solid model SM illustrated in FIG. 5-2(1) is completed.

FIGS. 6 through 8 illustrate a work procedure for processing a hole H1 in a work W1 expressed on a two-dimensional drawing.

The center position H2 and height position H3 of the hole H1 can be denoted by clicking corresponding positions on the drawing.

The process shape of the hole is selected from the menu, and by providing necessary orders on the submenu for processing tap holes, the shape of the hole H1 is created automatically by the system.

FIGS. 9 and 10 illustrate the procedure for converting an arrow view.

"Arrow view" is selected from the menu, and the surface defined by surface M8 on the solid model SM is clicked. Thereby, a reference coordinate orthogonal to the surface M8 is automatically created.

By indicating the specifications of the hole H10 on the reference coordinate, the system automatically creates the shape of the hole H10.

FIGS. 11 through 14 illustrate the procedure for creating various shape attributes.

FIG. 11 illustrates the procedure for creating the shape attributes of cross-sections, and FIG. 12 illustrates the procedure for creating shape attributes of spheres and cylinders.

FIG. 13 illustrates the procedure for creating the shape attributes of circular cones, and FIG. 14 illustrates the procedure for creating cylindrical holes illustrated in cross-sections.

FIG. 15 is an explanatory view showing an example of automating the tracing process.

In the description of FIG. 3, procedure steps have been described utilizing a tracing created manually, but it is also possible to detect connected lines automatically or to detect lines existing on the same plane. Further, it is also possible to automatically discriminate a wire solid structure composed of these elements.

Furthermore, it is also possible to automate the definition of surfaces and attributes which is otherwise performed manually.

## Claims

1. A method for converting a product illustrated as a two-dimensional projection drawing using CAD based on a standardized machine drawing method into a three-dimensional solid model, the method comprising:
a step of defining a drawing range of each projection drawing;
a step of defining a reference point of each projection drawing;
a step of selecting a line and a point as reference of a graphic shape illustrated in each projection drawing and recognizing the same as three-dimensional coordinates;
a step of selecting all the lines and points of elements constituting a component graphic, recognizing the three-dimensional coordinates and constituents thereof, and creating a wire frame solid model;
a step of selecting line elements of the constituent so that they constitute a closed shape in order to recognize a surface;
a step of recognizing all the lines or surfaces to complete a solid closed shape; and
a step of recognizing surfaces facing an exterior.

2. A method for converting a product illustrated as a two-dimensional projection drawing using CAD based on a standardized machine drawing method into a three-dimensional solid model, the method comprising:
a step of defining a drawing range of each projection drawing;
a step of defining a reference point of each projection drawing;
a step of selecting a line and a point as reference of a graphic shape illustrated in each projection drawing and recognizing the same as three-dimensional coordinates;
a step of selecting all the lines and points of elements constituting a component graphic, recognizing the three-dimensional coordinates and constituents thereof, and creating a wire frame solid model; and
a step of creating a three-dimensional solid model directly from the wire frame solid model.

3. The method for converting a two-dimensional projection drawing into a three-dimensional solid model according to claim 1 or claim 2, wherein the selection of points and lines of the graphic is performed automatically.

4. The method for converting a two-dimensional projection drawing into a three-dimensional solid model according to claim 1 or claim 2, further comprising a step of converting a surface displayed in arrow view on the projection drawing into an arrow view drawing.

5. The method for converting a two-dimensional projection drawing into a three-dimensional solid model according to claim 1 or claim 2, further comprising a step of converting a cross-sectional view of the two-dimensional projection drawing into a three-dimensional solid model.

6. The method for converting a two-dimensional projection drawing into a three-dimensional solid model according to claim 1 or claim 2, further comprising a step of defining an infinite plane that cannot be expressed by numerals shown in the two-dimensional projection drawing.

7. The method for converting a two-dimensional projection drawing into a three-dimensional solid model according to claim 1 or claim 2, further comprising a step of defining a shape that has a filled content or solid and a shape that has an empty content or hollow.

8. A method for converting a product illustrated as a two-dimensional projection drawing using CAD based on a standardized machine drawing method into a three-dimensional solid model, the method comprising:
a step of defining a drawing range of each projection drawing;
a step of defining a reference point of each projection drawing;
a step of selecting a line and a point as reference of a graphic shape illustrated in each projection drawing and recognizing the same as three-dimensional coordinates;
a step of selecting all the lines and points of elements constituting a component graphic, recognizing the three-dimensional coordinates and constituents thereof, and creating a wire frame solid model;
a step of selecting line elements of the constituent so that they constitute a closed shape in order to recognize a surface;
a step of recognizing all the lines or surfaces to complete a solid closed shape;
a step of recognizing surfaces facing an exterior; and
a step of creating an attribute of a product described in the two-dimensional projection drawing in the three-dimensional solid model.

9. A method for converting a product illustrated as a two-dimensional projection drawing using CAD based on a standardized machine drawing method into a three-dimensional solid model, the method comprising:
a step of defining a drawing range of each projection drawing;
a step of defining a reference point of each projection drawing;
a step of selecting a line and a point as reference of a graphic shape illustrated in each projection drawing and recognizing the same as three-dimensional coordinates;
a step of selecting all the lines and points of elements constituting a component graphic, recognizing the three-dimensional coordinates and constituents thereof, and creating a wire frame solid model;
a step of creating a three-dimensional solid model directly from the wire frame solid model; and
a step of creating attributes of a product described in the two-dimensional projection drawing in the three-dimensional solid model.

10. A method for converting an attribute in the method for converting a two-dimensional projection drawing into a three-dimensional solid model according to claim 8 or claim 9, wherein the attribute is a shape attribute represented by a hole, a cross-section, a sphere and a rotation.

11. A method for converting an attribute in the method for converting a two-dimensional projection drawing into a three-dimensional solid model according to claim 8 or claim 9, wherein the attribute is information such as dimension, tolerance, material, heat treatment, surface treatment, hole processing and tap.
